# EUROPEAN PATENT APPLICATION

(11) **EP 2 581 833 A1**
(43) Date of publication of application: **17.04.2013**
(21) Application number: 10852885.2
(22) Date of filing: 10.06.2010
(51) Int. Cl.: G06F 12/08

(54) **MULTI-CORE PROCESSOR SYSTEM, CONTROL PROGRAM, AND METHOD OF CONTROL**

(71) Applicant: Fujitsu Limited, Kawasaki-shi, Kanagawa 211-8588 (JP)
(72) Inventor: KURIHARA, Koji, Kawasaki-shi Kanagawa 211-8588 (JP); YAMASHITA, Koichiro, Kawasaki-shi Kanagawa 211-8588 (JP); YAMAUCHI, Hiromasa, Kawasaki-shi Kanagawa 211-8588 (JP)
(74) Representative: Ward, James Norman
(86) International application number: PCT/JP2010/059875
(87) International publication number: WO 2011/155046

(57) **Abstract**

An OS (141) calculates a total value of the instruction code size of tasks allocated to each CPU, out of a multi-core processor, and identifies a CPU having calculation results smaller than those of a master CPU (101) storing an executable code (502). A slave CPU (103) is identified. A snoop controller (105) migrates the executable code (502) from an instruction cache (111) of the slave CPU (103) to an instruction cache (113) of the slave CPU (103). An OS (143), after the migration of the executable code (502) to the instruction cache (113) of the slave CPU (103), causes the executable code (502) to remain resident in the instruction cache (113) by setting such a area of the instruction cache (113) in which the executable code is stored as a write-inhibit area.

## Description

### TECHNICAL FIELD

The embodiment discussed herein relates to a multi-core processor system, a control program, and a control method that control task allocation.

### BACKGROUND ART

Conventionally, a central processing unit (CPU) has a cache, which stores frequently used data and executable code of a frequently executed program (see, e.g., Patent Document 1 below). The frequently used data is, for example, the data referred to a number of times within the program being executed. The frequently executed program is, for example, the program of several steps to be executed at certain time intervals (hereinafter referred to as "periodically executed program").

In a multi-core processor system, a technology is known that, when a task whose execution is interrupted is re-executed, performs scheduling of the task to the same CPU that was executing the task before the interruption (see, e.g., Patent Document 2 below). This can reduce cache misses. Further, in a multi-core processor system having local memories, a technology is known of determining which local memory is to be tied to which task depending on the degree of effective utilization of the local memory (see, e.g., Patent Document 3 below), enabling an increase of the overhead due to data transfer to be prevented.

Patent Document 1: Japanese Laid-Open Patent Publication No. 2004-192403
Patent Document 2: Japanese Laid-Open Patent Publication No. H08-30562
Patent Document 3: Japanese Laid-Open Patent Publication No. H04-338837

### DISCLOSURE OF INVENTION

### PROBLEM TO BE SOLVED BY THE INVENTION

When data load increases, however, much of the data and the executable code of the programs stored in the cache are cleared. For example, in the multi-core processor system not having local memory, when a task of performing much input/output (I/O) processing is allocated to given CPU, the data load from a shared memory increases. When given CPU executes many tasks, instructions stored in an instruction cache are frequently cleared from the cache.

When a periodically executed program is allocated to the same CPU to which the task of a large instruction code size is allocated or that executes many tasks, there has been a problem of an increased probability of the executable code of the periodically executed program being cleared from the cache. Namely, there has been a problem of an increase in the number of times the CPU reloads the executable code of the frequently executed program from the shared memory to the cache.

Since the time for a CPU to read out the executable code from the shared memory is longer than the time for the CPU to read out the executable code from the cache, there has been a problem of an increase in the overhead when the CPU executes the executable code without reloading the executable code to the cache.

Thus, the executable code can be prevented from being cleared from the cache, for example, by locking such a area of the cache in which the executable code of the frequently executed program is stored. If another task allocated to the CPU that executes the periodically executed program is a task of a large cache miss, however, the area of the cache usable by the other task is reduced and therefore, the cache miss of the other task increases. As a result, there has been a problem of reduced efficiency of the CPU.

To solve the problems of the conventional technologies described above, an object of the present invention is to provide a multi-core processor system, a control program, and a control method that can prevent a specific program from being cleared from a cache and that can reduce the effect on an execution of a task allocated to the same CPU to which a periodically executed program is allocated.

### MEANS FOR SOLVING PROBLEM

According to one aspect of the present invention, a multi-core processor system is provided that includes an identifying unit that among cores of the multi-core processor, identifies other cores having a cache miss-hit rate lower than that of a given core storing a specific program in a cache, based on a task information volume of each core; a migrating unit that causes a control circuit to migrate the specific program from the cache of the given core to a cache of the identified core; and a setting unit that, after the specific program is migrated to the cache of the identified core, sets as a write-inhibit area, an area that is of the cache of the identified core and to which the specific program is stored.

### EFFECT OF THE INVENTION

The multi-core processor system, control program, and control method can prevent a specific program from being cleared from the cache and reduce the effect on the execution of tasks allocated to the same CPU to which a periodically executed program is allocated.

### BRIEF DESCRIPTION OF DRAWINGS

FIG. 1 is a block diagram of hardware of a multi-core processor system;
FIG. 2 is an explanatory diagram of one example of a size table 152;
FIG. 3 is an explanatory diagram of one example of identification information 153;
FIG. 4 is a functional block diagram of the multi-core processor system 100;
FIG. 5 is an explanatory diagram of an example of locking an area into which executable code 502 of a periodically executed program is loaded;
FIG. 6 is an explanatory diagram of an example of execution of a periodically executed program;
FIG. 7 is an explanatory diagram of allocation of a task that is not a periodically executed program;
FIG. 8 is an explanatory diagram of a calculation example of a total value of the instruction code size;
FIG. 9 is an explanatory diagram of a migration example of the executable code 502;
FIG. 10 is an explanatory diagram of an example of locking of an area in which the executable code 502 is stored;
FIG. 11 is a flowchart of a control procedure of an OS 141 (part 1);
FIG. 12 is a flowchart of the control procedure of an OS 141 (part 2);
FIG. 13 is a flowchart of migration processing by a snoop controller 105;
FIG. 14 is a flowchart of write-inhibit setting processing by the subsequently designated CPU; and
FIG. 15 is a flowchart of temporary stop processing by the currently designated CPU.

### BEST MODE(S) FOR CARRYING OUT THE INVENTION

Preferred embodiments of a multi-core processor system, a control program, and control method will be described with reference to the accompanying drawings.

First, a periodically executed program will be described. A periodically executed program is a program executed at given time intervals and is not a program activated consequent to other events. A general task has an indeterminate execution timing and execution period whereas a periodically executed program has an execution timing and execution period that are unchanging. For example, a communication standby program of a cellular phone can be given as the periodically executed program. The communication standby program of the cellular phone, irrespective of the tasking processing that the cellular phone may be executing, makes a periodic inquiry to a base station about communication to detect communication.

In the multi-core processor system of this embodiment, the multi-core processor is a processor having plural cores. So long as plural cores are provided, the multi-core processor may be a single processor with plural cores or may be a group of single-core processors in parallel. In this embodiment, for simplicity, description will be made using a group of parallel single-core processors as an example.

### (Hardware of Multi-Core Processor System)

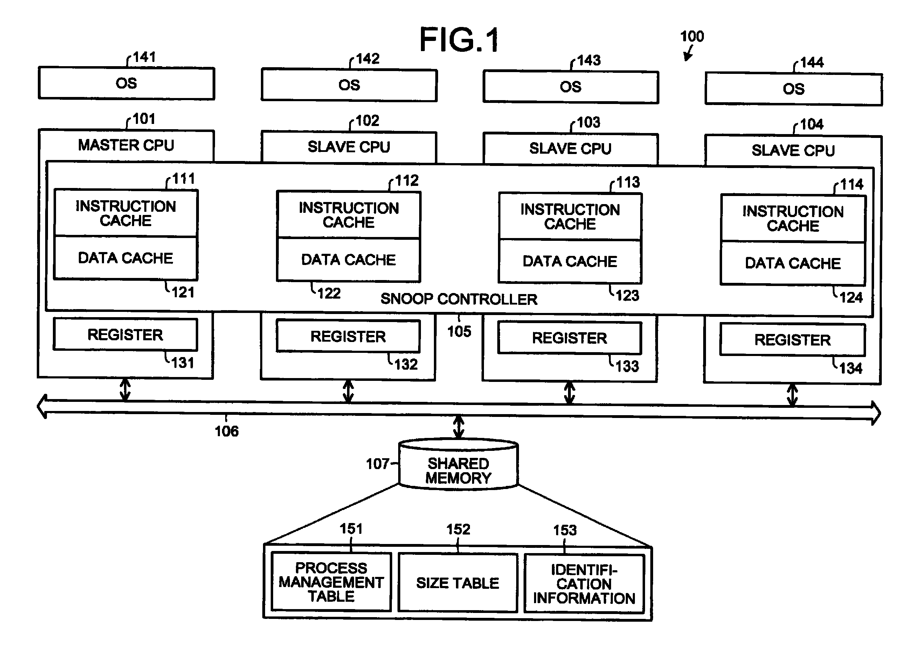

FIG. 1 is a block diagram of hardware of the multi-core processor system. In FIG. 1, a multi-core processor system 100 includes a master CPU 101, slave CPUs 102 to 104, a shared memory 107, and a snoop controller 105. Each CPU is connected to the shared memory 107 via a bus 106. Each CPU is connected to the snoop controller 105 via a bus different from the bus 106.

The master CPU 101 and the slave CPUs 102 to 104 each have a core, a register, and a cache. The master CPU 101 executes an OS 141 and governs control of the entire multi-core processor system 100. The OS 141 has a control program that controls which process of the software is to be allocated to which CPU and has a function of controlling the switching of the task allocated to the master CPU 101.

The slave CPUs 102 to 104 execute OSs 142 to 144, respectively. OSs 142 to 144 have a function of controlling the switching of the task allocated to the CPUs, respectively.

The cache of each CPU includes two kinds of caches, an instruction cache and a data cache. The instruction cache is a cache to hold the program and the data cache is a cache to hold the data to be used during execution of the program.

The master CPU 101 has an instruction cache 111 and a data cache 121 as the cache and the slave CPU 102 has an instruction cache 112 and a data cache 122 as the cache. The slave CPU 103 has an instruction cache 113 and a data cache 123 as the cache and the slave CPU 104 has an instruction cache 114 and a data cache 124 as the cache.

The cache of each CPU determines and controls an updating state and by exchanging information concerning the updating state, the cache of each CPU can determine in which cache the latest data is present. The snoop controller 105 performs this exchange of information.

Each CPU has a register. The master CPU 101 has a register 131 and the slave CPU 102 has a register 132. The slave CPU 103 has a register 133 and the slave CPU 104 has a register 134.

The snoop controller 105, upon receiving a migration instruction including the information regarding, for example, a source cache, a destination cache, and an object to migrate, makes a duplicate of the object to migrate from the source cache and stores the duplicated object to the destination cache. Thus, the snoop controller 105 migrates the object from the source cache to the destination cache.

In this embodiment, the area of cache in which the executable code of the periodically executed program is stored is assumed to be areas of the same address, irrespective of CPU. A user may predetermine, for example, that the executable code of the periodically executed program is to be stored in the head area of the cache.

The shared memory 107 is memory that is shared, for example, by the master CPU 101 and the slave CPUs 102 to 104. The shared memory 107 stores, for example, a process management table 151, a size table 152, identification information 153, and programs such as boot programs of the OSs 141 to 144. The shared memory 107 has, for example, a read only memory (ROM), a random access memory (RAM), a flash ROM, etc.

For example, the ROM or the flash ROM stores programs, etc., and the RAM is used as a work area of the master CPU 101 and the slave CPUs 102 to 104. Programs stored in the shared memory 107, by being loaded to the CPU, cause the CPU to execute the processing that is coded.

The process management table 151 is information indicating, for example, to which CPU each task is allocated and whether the CPU to which the task is allocated is executing the task. Each CPU reads out and stores the process management table 151 to the cache of the CPU. The OS 141, upon allocation of the task to any of the master CPU 101 and the slave CPUs 102 to 104, registers in the process management table 151 to which CPU, the task has been allocated.

Further, when task switching occurs, the CPU registers in the process management table 151 which task has been put in an execution state. Upon completion of the execution of the task, the CPU deletes the information of the completed task from the process management table 151.

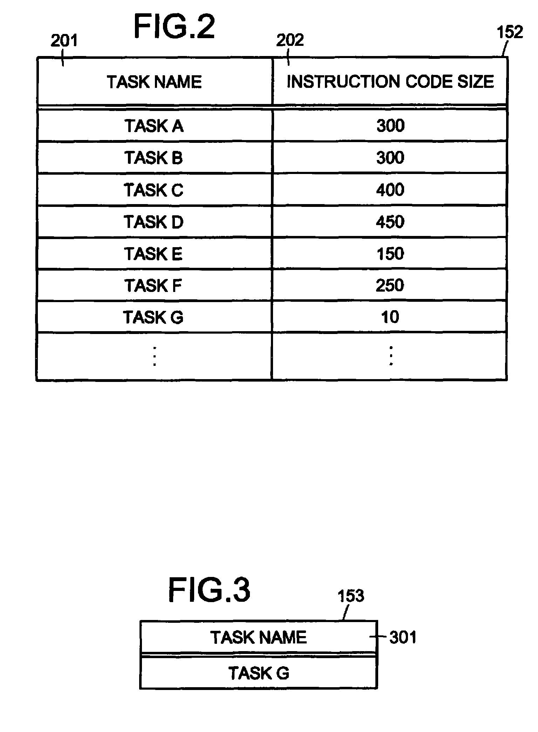

FIG. 2 is an explanatory diagram of one example of the size table 152. The size table 152 is a table indicative of the instruction code size of each task. The size table 152 has a task name field 201 and an instruction code size field 202. The task name field 201 holds the task name and the instruction code size field 202 holds the instruction code size of the task. The instruction code size is, for example, the number of steps of the task.

For example, in the size table 152, when a value in the task name field 201 is task A, the value of the instruction code size field 202 is 300.

FIG. 3 is an explanatory diagram of one example of the identification information 153. The identification information 153 is information indicating which task is the task of the periodically executed program. The identification information 153 has a task name item 301. For example, based on the identification information 153, it is determined that task G is the task of the periodically executed program.

### (Functional Block of Multi-Core Processor System 100)

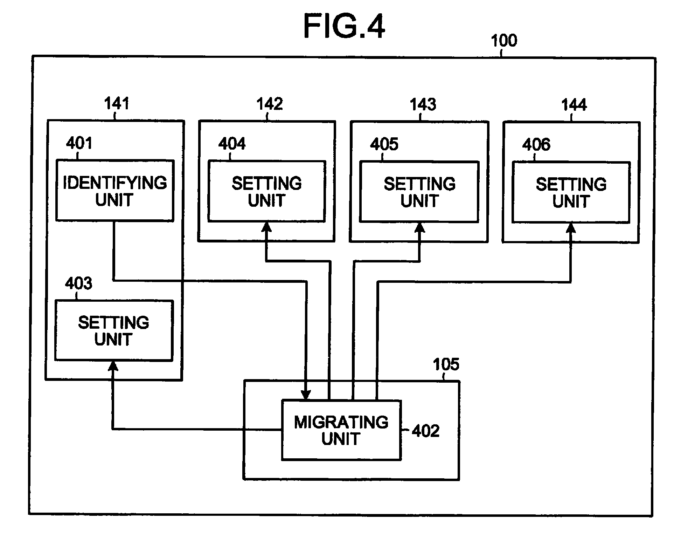

FIG. 4 is a functional block diagram of the multi-core processor system 100. The multi-core processor system 100 has, for example, an identifying unit 401, a migrating unit 402, and setting units 403 to 406. The OS 141, which is executed by the master CPU 101, has the identifying unit 401 and the setting unit 403. The snoop controller 105 has the migrating unit 402. The OS 142, which is executed by the slave CPU 102, has the setting unit 404. The OS 143, which is executed by the slave CPU 103, has the setting unit 405. The OS 144, which is executed by the slave CPU 104, has the setting unit 406.

The identifying unit 401 identifies, among cores the multi-core processor, other CPUs having a cache miss-hit rate lower than that of a given CPU that stores a specific program in the cache, based on the information volume of the task allocated to each CPU.

While, in this embodiment, the information volume of each task is referred to as the instruction code size and the instruction code size is defined as the number of steps of the task, the information volume of the task is not limited hereto and may be, for example, the data size of the task. If the instruction code size or the data size is small, an occupied area of the instruction cache is small and therefore, the cache miss-hit rate becomes small. While, in this embodiment, the periodically executed program is given as the specific program, the specific program is not limited hereto and may be any program selected by the user.

The migrating unit 402 migrates the specific program from the cache of the given core to the cache of a core identified by the identifying unit 401.

The setting unit of the OS running on the identified CPU, after the migrating unit 402 has migrated the specific program to the cache of the identified CPU, sets the area of cache to which the specific program is stored as a write-inhibit area. Further, after the migration of the specific program, the source setting unit of the OS from which the specific program is migrated, releases the inhibit setting on the area of the specific program set as the write-inhibit area.

In light of the above, an example will be described with reference to drawings. In the example, one core is given as a currently designated CPU and other core is given as a subsequently designated CPU.

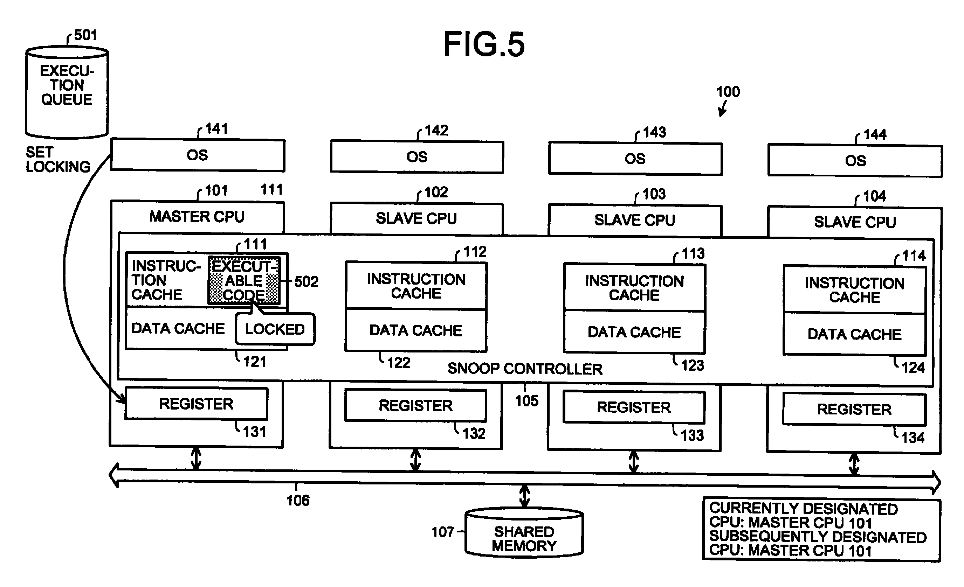

FIG. 5 is an explanatory diagram of an example of locking the area into which executable code 502 of the periodically executed program is loaded. The OS 141 first loads the executable code 502 of the periodically executed program into the instruction cache 111 of the master CPU 101. The OS 141 then locks, by register setting, the area in which the executable code 502 is loaded. Locking of the loaded area indicates setting of the loaded area as the write-inhibit area.

The register of each CPU includes a register pertinent to the cache and the register pertinent to the cache can set the work area of the cache. Therefore, the loaded area is locked by excluding the loaded area from the work area of the cache. The OS 141 sets the master CPU 101 as the currently designated CPU and the subsequently designated CPU.

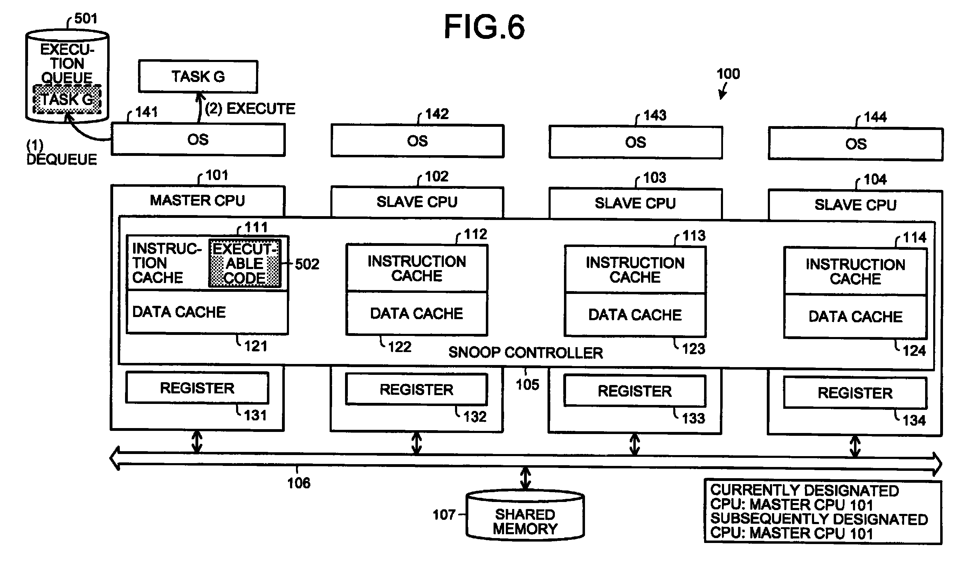

FIG. 6 is an explanatory diagram of an example of execution of a periodically executed program. Upon locking of the executable code 502 of the periodically executed program, the OS 141 monitors an execution queue 501 and if a task is stacked in the execution queue 501, the OS 141 (1) dequeues a task G.

The execution queue 501 is a queue of the OS 141 as a master OS 141. For example, a task for which an allocation instruction is issued by user operation is enqueued to the execution queue 501, the OS 141 dequeues the task from the execution queue 501, and the OS 141 determines to which CPU the dequeued task is to be allocated.

The OS 141 judges if task G is a periodically executed program, based on the identification information 153. Since task G is a periodically executed program, the OS 141 allocates task G to the currently designated CPU and the OS 141 (2) executes task G.

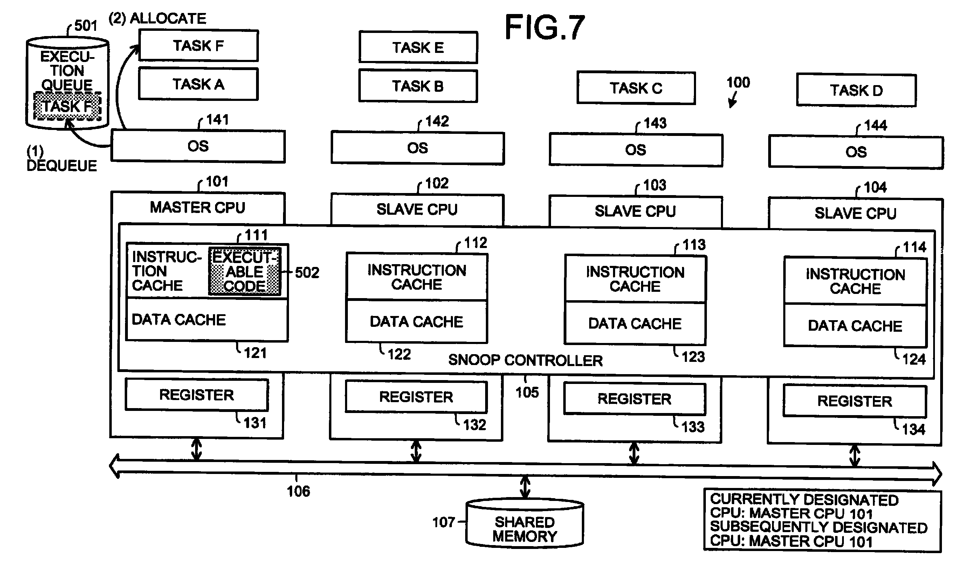

FIG. 7 is an explanatory diagram of allocation of a task that is not a periodically executed program. In FIG. 7, task A is allocated to the master CPU 101, task B and task E are allocated to the slave CPU 102, task C is allocated to the slave CPU 103, and task D is allocated to the slave CPU 104.

The OS 141 (1) dequeues a task from the execution queue 501 and judges if the dequeued task is a periodically executed program, based on the identification information 153. The dequeued task is task F and task F is not a periodically executed program. The OS 141 allocates task F to an arbitrary CPU. In this example, (2) task F is allocated to the master CPU 101.

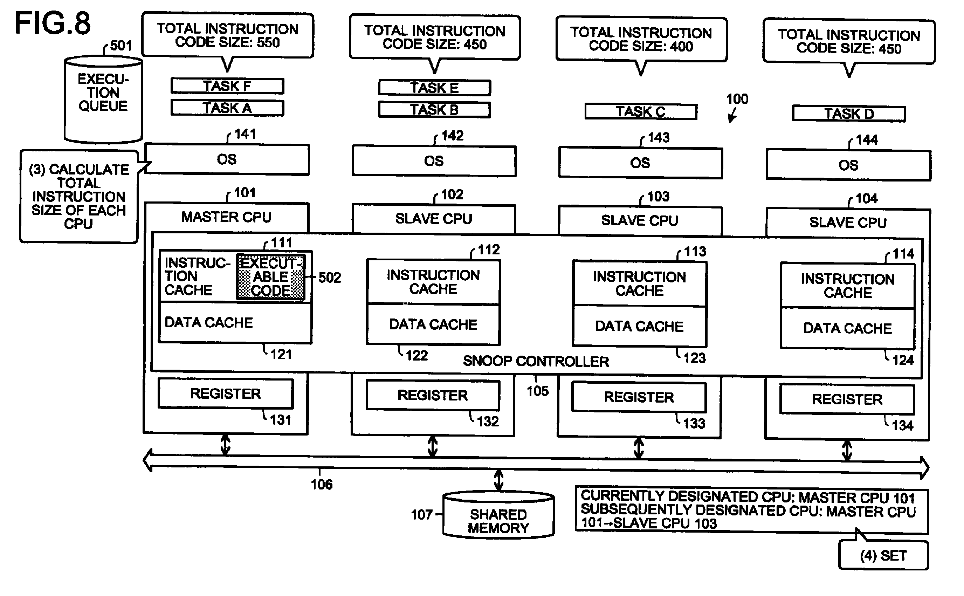

FIG. 8 is an explanatory diagram of a calculation example of a total value of the instruction code size. The OS 141 then (3) calculates a total instruction code size of each CPU based on the size table 152. Since the instruction code size of task A is 300 and the instruction code size of task F is 250, the total instruction code size of the master CPU 101 is 550. Since the instruction code size of task B is 300 and the instruction code size of task E is 150, the total instruction code size of the slave CPU 102 is 450.

Since the instruction code size of task C is 400, the total instruction code size of the slave CPU 103 is 400. Since the instruction code size of task D is 450, the total instruction code size of the slave CPU 104 is 450.

The OS 141 then identifies a CPU having a total instruction code size smaller than that of the currently designated CPU. Namely, the OS 141 can identify a CPU having a cache miss-hit rate lower than that of the currently designated CPU. In this example, the slave CPUs 102 to 104 are identified.

Since plural CPUs are identified, for example, the OS 141 selects the slave CPU 103 having the lowest total instruction code size. Namely, the OS 141 can identify the slave CPU 103 having the smallest cache miss-hit rate among the CPUs having a cache miss-hit rate lower than that of the currently designated CPU. The OS 141 (4) sets the identified slave CPU 103 as the subsequently designated CPU.

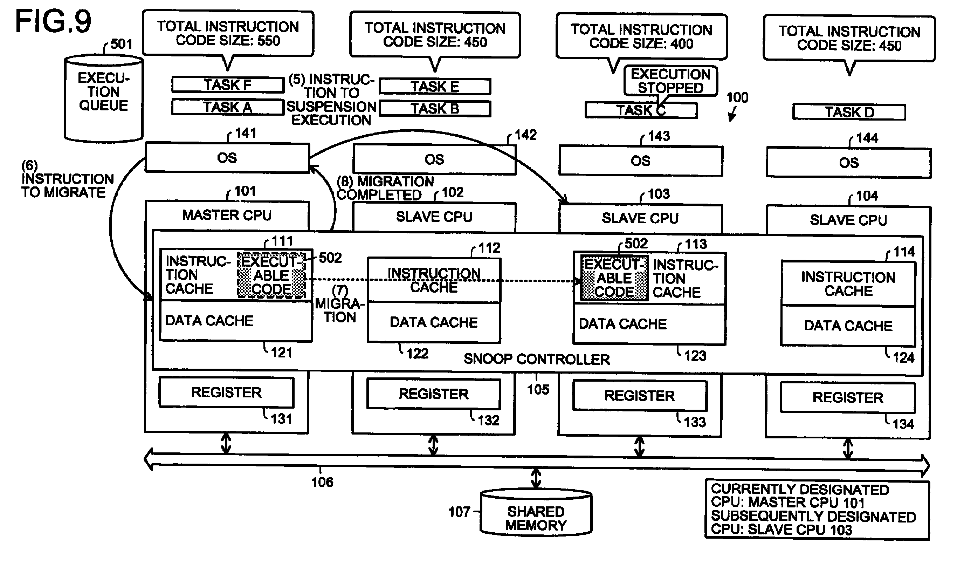

FIG. 9 is an explanatory diagram of a migration example of the executable code 502. The OS 141 then (5) instructs the slave CPU 103 as the subsequently designated CPU to suspend execution. The OS 143 (the OS running on the slave CPU 103 as the subsequently designated CPU) susupends the execution of task C.

The OS 141 (6) notifies the snoop controller 105 of the migration instruction to migrate the executable code 502 of the periodically executed program from the instruction cache of the currently designated CPU to the instruction cache of the subsequently designated CPU. In the migration instruction, the source cache is the instruction cache of the currently designated CPU, the destination cache is the instruction cache of the subsequently designated CPU, and the object to migrate is the executable code 502.

Upon receiving the migration instruction by the snoop controller 105, the snoop controller 105 (7) migrates the executable code 502 of the periodically executed program from the instruction cache of the currently designated CPU to the instruction cache of the subsequently designated CPU. The snoop controller 105 (8) notifies the OS 141 of completion of the migration.

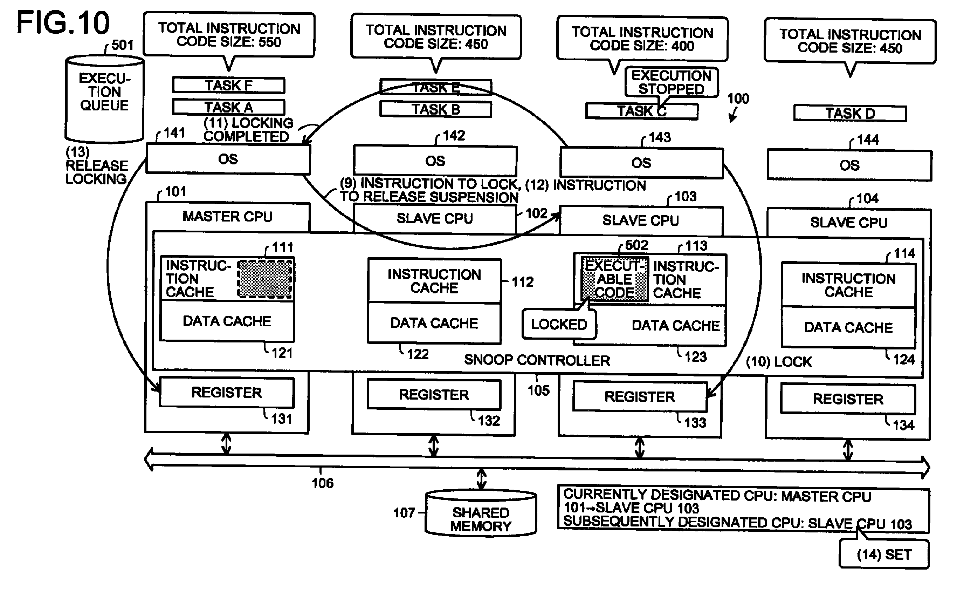

FIG. 10 is an explanatory diagram of an example of the locking of the area in which the executable code 502 is stored. The OS 141 then (9) instructs the subsequently designated CPU to lock the area in which the executable code 502 is stored among the areas of the instruction cache of the subsequently designated CPU. The OS 143 (10) locks an executable object by the register setting and the OS 143 (11) notifies the OS 141 of completion of the locking.

Upon receiving notification of completion of the locking, the OS 141 (12) instructs the subsequently designated CPU to release the suspension. The OS 143 releases the suspension of task C. The OS 141 (13) releases the locking of the instruction cache 111 of the master CPU 101 by the register setting. The OS 141 (14) sets the slave CPU 103 as the currently designated CPU.

### (Control Procedure of OS 141)

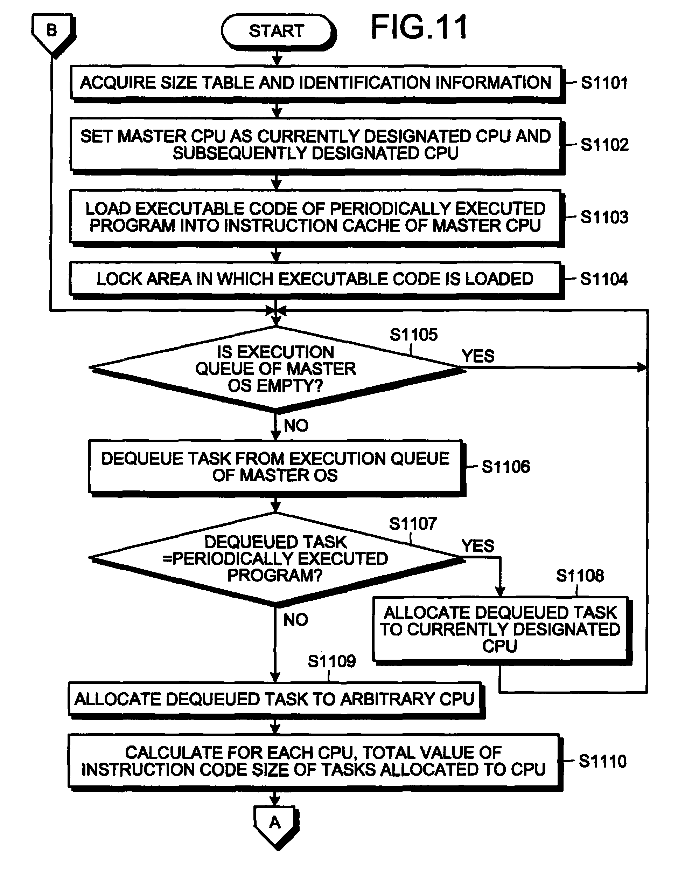

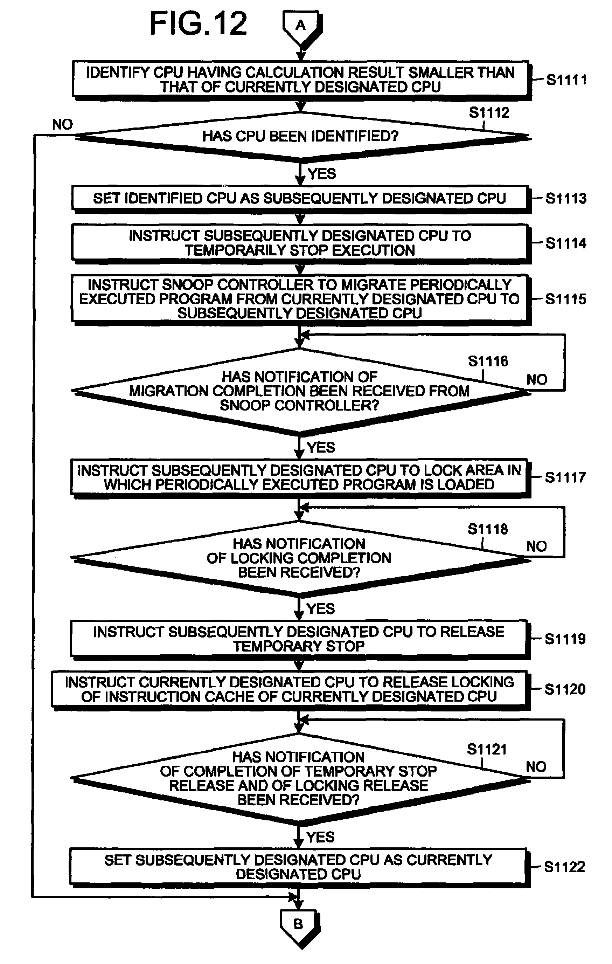

FIGs. 11 and 12 are flowcharts of a control procedure of the OS 141. The OS 141 first acquires the size table 152 and the identification information 153 (step S1101) and sets the master CPU as the currently designated CPU and the subsequently designated CPU (step S1102). The OS 141 loads the executable code of the periodically executed program into the instruction cache 111 of the master CPU 101 (step S1103) and locks the area in which the executable code is loaded (step S1104).

The OS 141 judges whether the execution queue 501 of the master OS is empty (step S1105) and if the execution queue 501 of the master OS is empty (step S1105: YES), the flow returns to step S1105. The master OS is the OS 141. On the other hand, if the OS 141 judges that the execution queue 501 of the master OS is not empty (step S1105: NO), the OS 141 dequeues a task from the execution queue 501 of the master OS (step S1106).

The OS 141 judges whether the dequeued task is the periodically executed program (step S1107). If the OS 141 judges that the dequeued task is the periodically executed program (step S1107: YES), the OS 141 allocates the dequeued task to the currently designated CPU (step S1108) and the flow proceeds to step S1105.

On the other hand, if the OS 141 judges that the dequeued task is not the periodically executed program (step S1107: NO), the OS 141 allocates the dequeued task to an arbitrary CPU (step S1109). The OS 141 calculates for each CPU, a total value of the instruction code size of the tasks allocated to the CPU (step S1110).

The OS 141 identifies a CPU having a calculation result smaller than those of the currently designated CPU (step S1111). Namely, the OS 141 identifies a CPU having the cache miss-hit rate lower than that of the currently designated CPU. The OS 141 judges whether a CPU having a calculation result smaller than that of the currently designated CPU has been identified (step S1112) and if the OS 141 judges that a CPU having a calculation result smaller than that of the currently designated CPU has not been identified (step S1112: NO), the flow returns to step S1105.

On the other hand, if the OS 141 judges that a CPU having the calculation results smaller than those of the currently designated CPU has been identified (step S1112: YES), the OS 141 sets the identified CPU as the subsequently designated CPU (step S1113). For example, when plural CPUs are identified, the CPU having the smallest calculation result is designated as the subsequently designated CPU, thereby enabling the periodically executed program to be stored in the CPU with the least usage of cache and minimizing the effect on the execution of other tasks.

The OS 141 instructs the subsequently designated CPU to suspend execution (step S1114). The OS 141 instructs the snoop controller 105 to migrate the periodically executed program from the instruction cache of the currently designated CPU to the instruction cache of the subsequently designated CPU (step S1115) and judges whether a notification of the migration completion has been received from the snoop controller 105 (step S1116). If the OS 141 judges that a notification of migration completion has not been received from the snoop controller 105 (step S1116: NO), the flow returns to step S1116.

If the OS 141 judges that the notification of the migration completion has been received from the snoop controller 105 (step S1116: YES), the OS 141 instructs the subsequently designated CPU to lock the area in which the periodically executed program is loaded (step S1117). The OS 141 judges whether a notification of locking completion has been received from the subsequently designated CPU (step S1118). If the OS 141 judges that a notification of the locking completion has not been received from the subsequently designated CPU (step S1118: NO), the flow returns to step S1118.

If the OS 141 judges that a notification of locking completion has been received from the subsequently designated CPU (step S1118: YES), the OS 141 instructs the subsequently designated CPU to release the suspension (step S1119). The OS 141 instructs the currently designated CPU to release the locking of the instruction cache of the currently designated CPU (step S1120).

The OS 141 judges whether a notification of locking completion has been received from the subsequently designated CPU (step S1121). If the OS 141 judges that a notification of locking completion has not been received from the subsequently designated CPU (step S1121: NO), the flow returns to step S1121. If the OS 141 judges that a notification of locking completion has been received from the subsequently designated CPU (step S1121: YES), the OS 141 sets the subsequently designated CPU as the currently designated CPU (step S1122) and the flow returns to step S1105.

### (Migration Processing by Snoop Controller 105)

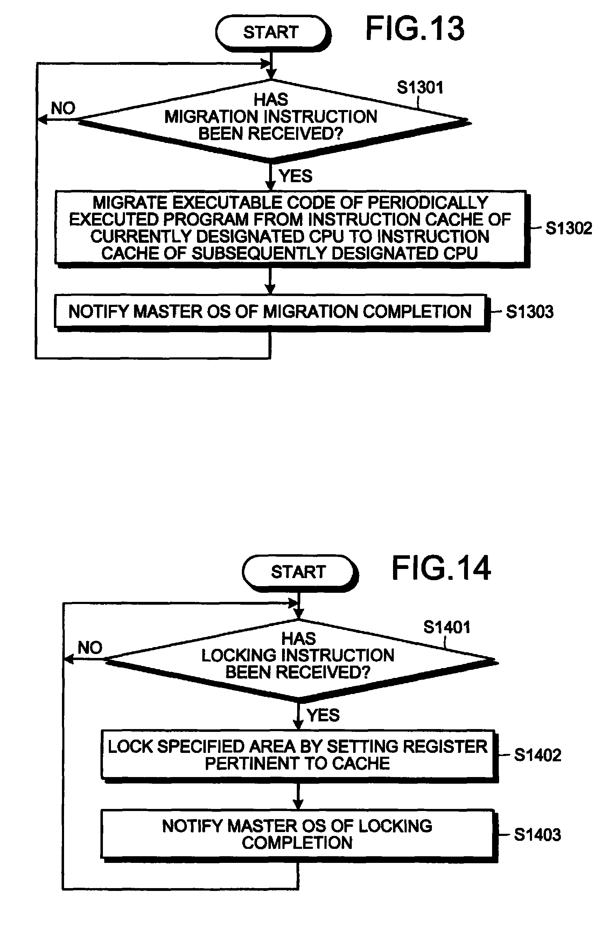

FIG. 13 is a flowchart of migration processing by the snoop controller 105. The snoop controller 105 first judges whether a migration instruction has been received (step S1301) and if the snoop controller 105 judges that a migration instruction has not been received (step S1301: NO), the flow returns to step S1301.

If the snoop controller 105 judges that a migration instruction has been received (step S1301: YES), then the snoop controller 105 migrates the executable code of the periodically executed program from the instruction cache of the currently designated CPU to the instruction cache of the subsequently designated CPU (step S1302). The snoop controller 105 notifies the master OS of migration completion (step S1303) and the flow returns to step S1301.

### (Write-Inhibit Setting Processing by Subsequently Designated CPU)

FIG. 14 is a flowchart of write-inhibit setting processing by the subsequently designated CPU. The subsequently designated CPU first judges whether a locking instruction has been received (step S1401). If the subsequently designated CPU judges that a locking instruction has not been received (step S1401: NO), the flow returns to step S1401.

On the other hand, if the subsequently designated CPU judges that a locking instruction has been received (step S1401: YES), the subsequently designated CPU locks the specified area by setting the register pertinent to the cache (step S1402). The subsequently designated CPU notifies the master OS of locking completion (step S1403). The master OS is the OS 141.

### (Temporary Stop Processing by Currently Designated CPU)

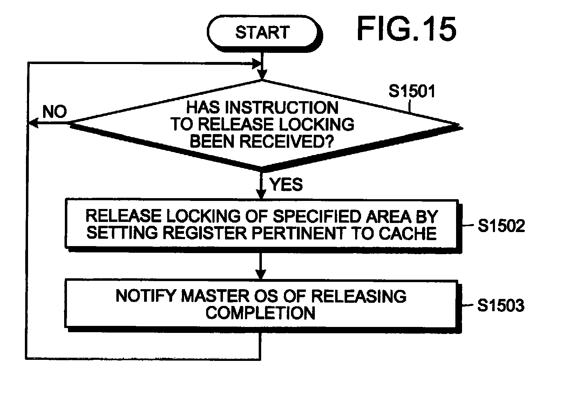

FIG. 15 is a flowchart of temporary stop processing by the currently designated CPU. The currently designated CPU first judges whether an instruction to release the locking has been received (step S1501). If the currently designated CPU judges that an instruction to release the locking has not been received (step S1501: NO), the flow returns to step S1501.

On the other hand, if the currently designated CPU judges that an instruction to release the locking has been received (step S1501: YES), the currently designated CPU releases the locking of the specified area by setting the register pertinent to the cache (step S1502) and notifies the master OS of releasing completion (step S1503).

As described above, according to the multi-core processor system, the control program, and the control method, the periodically executed program is migrated to the cache of the CPU having a cache miss-hit rate lower than that of the CPU storing the periodically executed program. Further, the area in which the periodically executed program is stored, among the cache of the CPU having a lower cache miss-hit rate, is set as the write-inhibit area, thereby causing the periodically executed program to continue to reside in the cache, without being cleared and therefore, enabling the periodically executed program to be prevented from being re-loaded. Further, even if the periodically executed program continues to reside in the cache of the CPU, the effect on the execution of other task allocated to the CPU can be reduced. Namely, the occurrence of the cache miss can be suppressed at the time of execution of another task different from the periodically executed program allocated to each CPU and the CPU efficiency can be prevented from being lowered.

### EXPLANATIONS OF LETTERS OR NUMERALS

| | |
|---|---|
| 100 | multi-core processor system |
| 105 | snoop controller |
| 111, 112, 113, 114 | instruction cache |

## Claims

1. A multi-core processor system comprising:
an identifying unit that among cores of the multi-core processor, identifies other cores having a cache miss-hit rate lower than that of a given core storing a specific program in a cache, based on a task information volume of each core;
a migrating unit that causes a control circuit to migrate the specific program from the cache of the given core to a cache of the identified core; and
a setting unit that, after the specific program is migrated to the cache of the identified core, sets as a write-inhibit area, an area that is of the cache of the identified core and to which the specific program is stored.

2. A control program causing a multi-core processor capable of accessing a control circuit that upon receiving a migration notification of a cache of a destination core, a cache of a source core and a program to be migrated, migrates the program from the cache of the destination core to the cache of the source core, to execute:
identifying among cores of the multi-core processor, other cores having a cache miss-hit rate lower than that of a given core storing a specific program in a cache, based on a task information volume of each core;
causing the control circuit to migrate the specific program from the cache of the given core to a cache of the identified core; and
setting as a write-inhibit area and after the specific program is migrated to the cache of the identified core, an area that is of the cache of the identified core and to which the specific program is stored.

3. A control method executed by a multi-core processor capable of accessing a control circuit that upon receiving a migration notification of a cache of a destination core, a cache of a source core and a program to be migrated, migrates the program from the cache of the destination core to the cache of the source core, the control method comprising:
identifying among cores of the multi-core processor, other cores having a cache miss-hit rate lower than that of a given core storing a specific program in a cache, based on a task information volume of each core;
causing the control circuit to migrate the specific program from the cache of the given core to a cache of the identified core; and
setting as a write-inhibit area and after the specific program is migrated to the cache of the identified core, an area that is of the cache of the identified core and to which the specific program is stored.
